# EUROPEAN PATENT APPLICATION

(11) **EP 2 687 395 A1**
(43) Date of publication of application: **22.01.2014**
(21) Application number: 12425124.0
(22) Date of filing: 18.07.2012
(51) Int. Cl.: B60K 15/04, F16L 37/084

(54) **Spout and cap assembly for tanks**

(71) Applicant: F.A.R.M.A.- S.r.l. Fabbrica Accessori Ricambi Moto E Auto, 40059 Medicina, Frazione Fossatone (BO) (IT)
(72) Inventor: Poma, Armando, 40060 Dozza (BO) (IT)
(74) Representative: Modiano, Micaela Nadia

(57) **Abstract**

A spout and cap assembly for tanks, which comprises a substantially tubular body (2) which can be at least partially inserted in an opening of a tank. The body (2) defines a through duct (3) within it, for the at least partial introduction and the extraction of a nozzle for refueling with a liquid, of the type of a fuel or of an additive, which can be accommodated in the tank. Moreover, the body (2) is associated with a flap (4), normally arranged so as to close the duct (3), which is elastically movable, following the introduction and the extraction of the nozzle, so as to allow the refueling of liquid. Arranged external to at least one portion of the body (2) is a sleeve (6) which delimits, with the outer surface of the body (2), an interspace (7). During the refueling, and at the point where the level of the liquid reaches a first terminal edge of the interspace (7), the liquid is automatically forced to ascend along the duct (3), for the interruption of the refueling and the definition of the maximum filling level of the tank.

The assembly comprises stable coupling means (8), direct or indirect, between the sleeve (6) and the substantially tubular body (2). The coupling means (8) comprise at least one protrusion (9) which protrudes transversely and is defined along either the sleeve (6) or a reference surface associated therewith, and which can engage in a rigid manner, by interlocking, in at least one corresponding hole (10), which is defined along the other one of the sleeve (6) and the reference surface.

## Description

The present invention relates to a spout and cap assembly for tanks.

As is known, the tanks of motor vehicles, which are designed to accommodate liquids such as fuels and additives, have an opening which is accessible from the outside, so as to allow the operator to refuel the vehicle.

Such an opening generally receives a spout and cap assembly, which is constituted by a tubular element, at least partially inserted in the opening, which internally defines a through duct (such as to put the inside of the tank in communication with the outside), which is normally flow controlled by a closing flap.

The flap is rotatably, and elastically, associated with the duct, so that the insertion of the refueling nozzle can automatically determine the elastic rotation of the flap, so as to allow the passage of the nozzle and thus the filling of the tank with the liquid (the fuel or additive) dispensed by the nozzle.

According to methods that are substantially known, frequently implementation solutions are employed that are adapted to prevent, for safety reasons, the tank from being filled completely and, vice versa, to set the maximum level that can be reached by the liquid inside, beyond which the dispensing process is automatically blocked.

More precisely, in order to achieve such result, often an additional sleeve is used, which is coaxially fixed to the outer surface of the tubular element, or to an outer collar of the latter. The sleeve is intended in turn to be accommodated in the tank and, with the outer walls of the tubular element, it delimits a sort of interspace which effectively defines, with its lower end open and directed toward the tank, the aforementioned maximum reachable level.

In fact, when the liquid, which is progressively inserted in the tank, begins to lap against the lower end of the interspace, further ascent inside the latter is prevented (or in any case greatly slowed) by the air chamber that has formed in it: the liquid is thus forced to fill (rapidly, given the reduced passage section) the internal duct of the tubular element, until it makes contact with the nozzle, stopping it thanks to the safety devices that are typically provided therein, thus achieving the set objective.

The fixing of the sleeve to the outer surface of the tubular element (or to the collar mentioned above), is provided, according to known methods, by adhesive bonding, but such implementation solution is not devoid of drawbacks.

In fact, in the first place it is difficult to ensure the rigidity of the coupling and at the same time ensure its stability in view of the variations in temperature to which the liquid present in the tank is subjected during the normal use of the vehicle. If adhesives are used which are too soft, such as silicone adhesives, small (but unwanted) relative movements can occur between the pieces under major stresses, whereas if hard adhesives are used (to guard against the danger of relative movements just described), then, when significant variations in temperature occur, there is a high risk of mutual separation of the pieces glued together.

What is more, independently of the problems caused by variations of temperature, the stability of the coupling over time is often prejudiced by the stresses to which the sleeve and the tubular element are subjected inside the tank, when the latter is filled with liquid. It must in fact be kept in mind that often the above-mentioned pieces are mounted inclined and extend inside the tank for several centimeters, thus the vibrations of the engine, and the hammering transmitted by the rapid movements of the liquid during the movement of the vehicle, determine the onset of stresses that are often excessive and located right at the area of adhesive bonding.

Moreover, more generally, coupling by adhesive bonding increases the overall time required for assembling the assembly (owing to the time required for the adhesive to dry), and does not permit easy verification of the correctness of the coupling achieved, or immediate identification of defective couplings.

Finally, it should be observed that the huge range of fuels and additives that can be accommodated in tanks, each one of which is provided with particular chemical-physical properties, often makes it necessary to vary the type of adhesive, in order to select the one which is compatible with the specific liquid adopted.

The aim of the present invention is to solve the above-mentioned problems, by providing a spout and cap assembly for tanks, which prevents them from being filled completely, during refueling, with a solution that is effective and stable.

Within this aim, an object of the invention is to provide an assembly that is stable and robust, even with the variation of the temperatures in play and under major stresses.

A further object of the invention is to provide an assembly that can be assembled in a practical and easy manner, allowing an immediate and simple verification of the quality of the couplings achieved.

A further object of the invention is to provide an assembly that ensures a high reliability of operation.

Another object of the invention is to provide an assembly that can be easily implemented using elements and materials that are readily available on the market.

Another object of the invention is to provide an assembly that is low-cost and safely applied, for any type of liquid intended to be accommodated in the tank.

This aim and these objects are all achieved by a spout and cap assembly for tanks, comprising a substantially tubular body which can be at least partially inserted in an opening of a tank, said body defining a through duct within it, for the at least partial introduction and the extraction of a nozzle for refueling with a liquid, of the type of a fuel or of an additive, which can be accommodated in the tank, said body being associated with a flap which is normally arranged so as to close the duct, said flap being elastically movable, following the introduction and the extraction of the nozzle, in order to allow the refueling of liquid, a sleeve being arranged external to at least one portion of said body which delimits, with the outer surface of said body, an interspace, during the refueling, and at the point where the level of the liquid reaches a first terminal edge of said interspace, said liquid being automatically forced to ascend along said duct, for the interruption of the refueling and the definition of the maximum filling level of the tank, **characterized in that** it comprises stable coupling means, direct or indirect, between said sleeve and said substantially tubular body, said coupling means comprising at least one protrusion which protrudes transversely and is defined along either said sleeve or a reference surface associated therewith, and which can engage in a rigid manner, by interlocking, in at least one corresponding hole, which is defined along the other one of said sleeve and said reference surface.

Further characteristics and advantages of the invention will become better apparent from the description of a preferred, but not exclusive, embodiment of the assembly according to the invention, which is illustrated by way of non-limiting example in the accompanying drawings wherein:

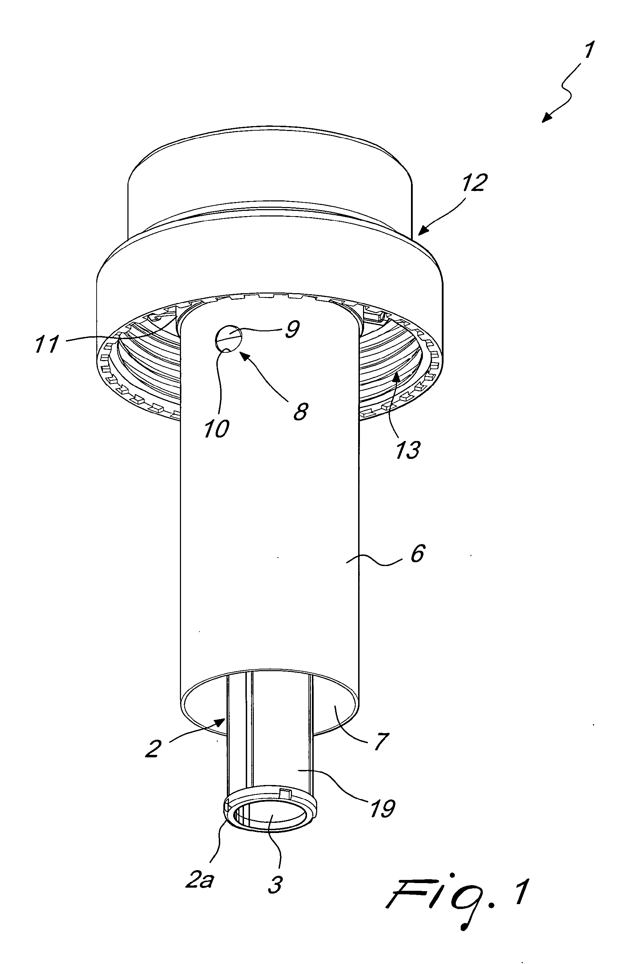

Figure 1 is a perspective view of the spout and cap assembly according to the invention;
Figure 2 is a sectional view of the spout and cap assembly according to the invention, in axial section, with another element associable therewith.

With reference to the figures, the reference numeral 1 generally designates a spout and cap assembly for tanks, and in more detail the assembly 1 is intended to be used on tanks for the containment of liquid, of the type of fuel and/or additives, in motor vehicles of various types, and in still more detail in trucks, semi-trailer trucks, lorries and the like.

Therefore it is to such application that reference will be made hereinafter in this discussion, but the possibility is not ruled out of adopting the assembly 1 according to the invention as a spout and cap for different tanks or containers, according to specific requirements, without departing from the scope of protection claimed herein.

The spout and cap assembly 1 thus comprises a substantially tubular body 2 (typically, but not exclusively, cylindrical), which can be at least partially inserted in an opening of the tank, and which defines internally a through duct 3, in which a nozzle can thus be at least partially introduced, and subsequently extracted, for refueling the liquid which is adapted to be accommodated in the tank, typically in order to allow the operation of an endothermic engine of the motor vehicle.

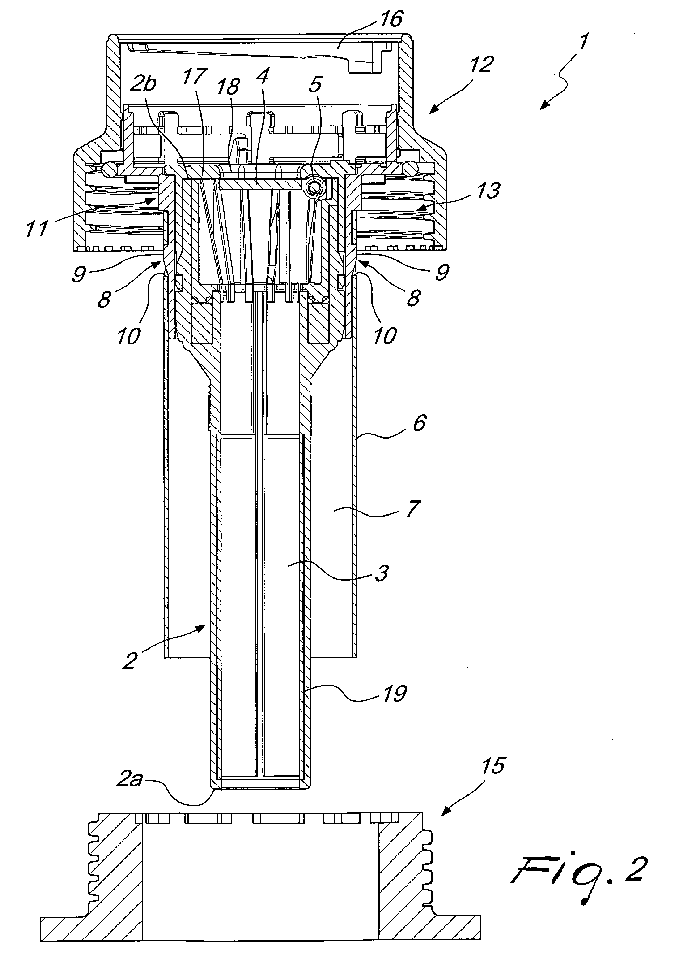

The body 2 is associated with a flap 4, which is normally arranged so as to close the duct 3 (in the configuration in which it is shown in Figure 2), in order to prevent particles and other unwanted elements from entering the tank. The flap 4 is elastically movable, following the introduction and the extraction of the nozzle, so as to allow the refueling of liquid: for example, the flap 4 can be subject to the action of a spring 5, the elastic reaction of which, as just described, keeps it closing the duct 3 and returns it to such configuration when the nozzle (which with its insertion causes its rotation) is extracted.

Moreover, arranged (substantially coaxially) outside at least one portion of the body 2 is a sleeve 6 (typically, but not exclusively, cylindrical) which delimits, together with the outer surface of the body 2, an interspace 7: according to methods that are substantially known, during the refueling, and at the point where the level of the liquid reaches a first terminal edge of the interspace 7, the air chamber which has formed inside the latter prevents the liquid from filling it, automatically forcing it to ascend along the duct 3, thus coming into contact with the nozzle and interrupting the refueling.

The lower edge of the interspace 7 in fact thus defines the maximum filling level of the tank, which can be set in advance, by dimensioning the aforementioned elements conveniently (and, in more detail, by adjusting the ratio between the shape structure of the tank and the length of the sleeve 6 at will).

According to the invention, the spout and cap assembly 1 comprises means 8 of stable coupling, direct or indirect, between the sleeve 6 and the tubular body 2: such coupling means 8 comprise first of all at least one protrusion 9 which protrudes along a direction which is transverse (with respect to the axis of the body 2 and of the sleeve 6), defined along either the sleeve 6 or a reference surface associated therewith. The protrusion 9 can be engaged rigidly, by interlocking, in at least one corresponding hole 10, which is defined along the other one of the sleeve 6 and the reference surface.

In particular, according to an embodiment of important practical interest, shown in the accompanying figures for the purposes of non-limiting example of the application of the invention, the hole 10 is defined along the lateral surface of the sleeve 6, and the protrusion 9 protrudes transversely (outward) from the reference surface associated with the sleeve 6.

Even more specifically, the sleeve 6 has a plurality of holes 10, which are radially equally distributed at least at a preset axial height (and for example the holes 10 can be two in number, which are diametrically opposite, as in the accompanying figures).

It should be noted that the reference surface can be any (as can the number and distribution of the holes 10 and of the protrusions 9), and for example it could be constituted by a surface region of the body 2, thus providing a direct coupling between the latter and the sleeve 6.

According to the preferred, but not limiting, embodiment of the application of the invention, the spout and cap assembly 1 according to the invention comprises a substantially axially symmetric collar 11, which is coaxially interposed between the substantially tubular body 2 and the sleeve 6: the reference surface, from which the protrusions 9 protrude, is thus constituted by a piece of the side wall of the collar 11 and in this case an indirect stable coupling is thus provided between the sleeve 6 and the tubular body 2.

Conveniently, the spout and cap assembly 1 according to the invention also comprises a hollow cylinder 12, which is stably coupled to the collar 11, substantially on the side opposite to the reference surface. Such hollow cylinder 12 has means 13 of stable connection with the tank.

More specifically, the stable connection means 13 comprise a female thread 14, which is defined inside the hollow cylinder 12 and can be stably mated with a threaded perimetric neck 15, which is arranged at the opening of the tank and directed outward.

It should furthermore be noted that the possibility is not excluded of providing assemblies 1 according to the invention in which the coupling between cylinder 12 and tank is provided by welding, adhesive bonding, etc, without departing from the scope of protection claimed herein.

Conveniently, the hollow cylinder 12 has, on the inside, on the side opposite to the female thread 14, a contoured protruding lip 16, for mating in a bayonet-like manner with a safety plug (which can optionally be actuated with a device controlled by a key, in order to prevent access to the tank).

As can be seen from the accompanying figures, according to the embodiment proposed in them by way of non-limiting example of the application of the invention, the tubular body 2 has a first end 2a, which is directed toward the tank when the body 2 is inserted in the opening, and a second end 2b, which is opposite to the first end 2a and closed by a plate 17 which has a central orifice 18 of preset size.

Thus by selecting the size of the orifice 18 conveniently, it is possible to ensure that only refueling nozzles having a transverse encumbrance not greater than the area of the orifice 18 can be inserted in the duct 3 of the body 2, thus reducing the risks of filling the tank with the wrong liquid (since, as is known, typically the size and encumbrance of refueling nozzles are directly correlated to the type of fuel or additive that they dispense).

Conveniently, as can be seen in particular in Figure 2, the flap 4 is arranged at the second end 2b of the substantially tubular body 2: in this manner, when the flap 4 is arranged in the non-deformed configuration (closing the duct 3, as previously noted), it substantially rests on the plate 17.

It should therefore be noted that between the orifice 18, which is adapted to prevent the passage of refueling nozzles adapted to dispense a liquid other than the one that should fill the tank, and the flap 4 (in the non-deformed configuration), there is no interspace; in conventional assemblies on the other hand, typically the two aforementioned elements have a distance between the centers that is such as to define an intermediate chamber.

It should be observed that the absence of such intermediate chamber, in the assembly 1 according to the invention, ensures an optimal operation of the assembly 1 and guards against the danger of damage and malfunction, following attempts to fill the tank with a wrong liquid.

In conventional assemblies in fact, if the operator attempts to insert a wrong nozzle in the duct, even though the orifice blocks the introduction, it is possible for a few drops of liquid (erroneously dispensed before the error is noticed) to be deposited in the intermediate chamber, from where, over time, it can trickle through the joints and gasket seals until it is introduced into the tank, thus damaging the vehicle.

Such eventuality is for example especially damaging to urea tanks, which as is known are used to abate the atmospheric emissions of nitrogen oxides present in the exhaust fumes of motor vehicles (and in particular of lorries, semi-trailer trucks and trucks). Mixing urea with even a few drops of a different liquid (unleaded gasoline or diesel for example), can cause major damage to the vehicle and for this reason the application of the assembly 1 according to the invention in urea tanks is of particular interest, since the substantial contact between flap 4 and plate 17, and the lack of an intermediate chamber, ensures that any droplets of liquid, erroneously dispensed from the nozzle, will drain outside the body 2 and the collar 11, with no possibility of introduction into the tank owing to stagnation in an intermediate chamber.

Advantageously, at least one end portion of the outer surface of the body 2, which comprises the first end 2a, is substantially constituted by a filtering membrane 19, which is capable of retaining particles which may be suspended in the liquid dispensed from the nozzle, inserted in the duct 3.

Depending on the liquid that is to be stored in the tank, the membrane 19 can have a different shape structure so as to vary the quality of the filtration as desired.

The operation of the assembly according to the invention is thus evident in light of the description up to this point: it is possible to insert a refueling nozzle into the duct 3, through the orifice 18 of the plate 17, in order to fill a tank with fuel or with a predefined additive.

According to the methods explained in the foregoing paragraphs, the presence of the sleeve 6 makes it possible to define a maximum filling level of the tank, corresponding substantially to the first terminal edge of the interspace 7, beyond which the liquid is forced to ascend in the duct 3 thus automatically blocking the nozzle (or at least visually indicating to the operator that the maximum limit has been reached).

The choice to provide the coupling between sleeve 6 and reference surface by interlocking, basically taking advantage of the elastic deformation of the materials, eliminates the need to use additional elements, such as screws or adhesive, thus keeping the costs of supply and mounting low.

Moreover, the interlocking coupling achieved is certainly effective, robust and stable, even with the variation of the temperatures in play (which evidently do not have an effect on the quality of the coupling obtained, thanks to its specific type) and under major stresses (thanks to the choice to use an irreversible mechanical fixing).

In addition, it should be noted that the mounting of the assembly 1 according to the invention (and in particular of the sleeve 6), is extremely simple, practical and easy (it can be done manually without using special tools) and does not require complex additional work on the parts involved: the sleeve 6 is of the commercial type and can be cut and perforated with a cutting tool, to a desired length, as a function of the maximum filling level that one wants to establish, whereas the body 2, and optionally the collar 11, are provided by molding.

Moreover it is evident that, after mounting, it is a simple matter to visually verify the quality of the coupling obtained, instantly identifying any defects or assembly errors; moreover, should the specific requirements require greater assurances of the stability of the coupling obtained, it is possible to immediately subject the sleeve 6 and in general the assembly 1 to a force, in order to assess the robustness of the mutual coupling described above.

Finally, by avoiding the use of adhesives, it is possible to adopt the same assembly 1 for any type of fuel or additive which is supposed to be introduced in the tank.

In practice it has been found that the spout and cap assembly according to the invention fully achieves the set aim, in that the use of stable coupling means between the sleeve and the body, comprising a transversely protruding protrusion which is rigidly engageable, by interlocking, in a corresponding hole, makes it possible to provide a spout and cap assembly for tanks, which prevents them from being completely filled, during refueling, with a solution that is effective and stable.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

## Claims

1. A spout and cap assembly for tanks, comprising a substantially tubular body (2) which can be at least partially inserted in an opening of a tank, said body (2) defining a through duct (3) within it, for the at least partial introduction and the extraction of a nozzle for refueling with a liquid, of the type of a fuel or of an additive, which can be accommodated in the tank, said body (2) being associated with a flap (4) which is normally arranged so as to close the duct (3), said flap (4) being elastically movable, following the introduction and the extraction of the nozzle, so as to allow the refueling of liquid, a sleeve (6) being arranged external to at least one portion of said body (2) which delimits, with the outer surface of said body (2), an interspace (7), during the refueling, and at the point where the level of the liquid reaches a first terminal edge of said interspace (7), said liquid being automatically forced to ascend along said duct (3), for the interruption of the refueling and the definition of the maximum filling level of the tank, **characterized in that** it comprises stable coupling means (8), direct or indirect, between said sleeve (6) and said substantially tubular body (2), said coupling means (8) comprising at least one protrusion (9) which protrudes transversely and is defined along either said sleeve (6) or a reference surface associated therewith, and which can engage in a rigid manner, by interlocking, in at least one corresponding hole (10), which is defined along the other one of said sleeve (6) and said reference surface.

2. The spout and cap assembly according to claim 1, **characterized in that** said at least one hole (10) is defined along the lateral surface of said sleeve (6), said at least one protrusion (9) protruding transversely from said reference surface associated with said sleeve (6).

3. The spout and cap assembly according to one or more of the preceding claims, **characterized in that** said sleeve (6) has a plurality of said holes (10), which are radially equally distributed at least at a preset axial height.

4. The spout and cap assembly according to one or more of the preceding claims, **characterized in that** it comprises a substantially axially symmetric collar (11), which is coaxially interposed between said substantially tubular body (2) and said sleeve (6), a piece of the side wall of said collar (11) constituting said reference surface.

5. The spout and cap assembly according to one or more of the preceding claims, **characterized in that** it comprises a hollow cylinder (12), which is stably coupled with said collar (11) substantially on the side opposite to said reference surface, said hollow cylinder (12) having means (13) of stable connection with the tank.

6. The spout and cap assembly according to claim 5, **characterized in that** said stable connection means (13) comprise a female thread (14), which is defined inside said hollow cylinder (12) and can be stably mated with a threaded perimetric neck (15) which is arranged at the opening of the tank and directed outward.

7. The spout and cap assembly according to one or more of the preceding claims, **characterized in that** said hollow cylinder (12) has on its inside, on the side opposite to said female thread (14), a shaped slot, for mating in a bayonet-like manner with a safety plug, so as to prevent access to the opening of the tank.

8. The spout and cap assembly according to one or more of the preceding claims, **characterized in that** said substantially tubular body (2) has a first end, which is directed toward the tank when said body (2) is inserted in the opening, and a second end, which is opposite to said first end and is closed by a plate (17) which has a central orifice (18) of preset size, so as to allow the insertion of refueling nozzles having a transverse encumbrance not greater than the area of said orifice (18).

9. The spout and cap assembly according to one or more of the preceding claims, **characterized in that** said flap (4) is arranged at said second end of said substantially tubular body (2), in the non-deformed configuration said flap (4) being arranged so as to close said duct (3) and substantially resting on said plate (17).

10. The spout and cap assembly according to one or more of the preceding claims, **characterized in that** at least one end portion of the outer surface of said body (2), comprising said first end, is substantially constituted by a filtering membrane (19), for the retention of particles which may be suspended in the liquid dispensed by the nozzle inserted in said duct (3).
